# EUROPÄISCHE PATENTSCHRIFT

(11) **EP 3 412 124 B1**
(45) Veröffentlichungstag und Bekanntmachung des Hinweises auf die Patenterteilung: **29.07.2020**
(21) Anmeldenummer: 18174522.5
(22) Anmeldetag: 28.05.2018
(51) Int. Cl.: A01B 23/02, A01B 21/04, A01B 39/16, A01B 39/18

(54) **ROLLHACKE**
ROLLING CULTIVATOR
HOUE ROTATIVE À POINTES

(30) Priorität: 07.06.2017 DE 202017103409 U
(43) Veröffentlichungstag der Anmeldung: 12.12.2018
(73) Patentinhaber: Bähr Bau- und Landmaschinen GmbH & Co. KG, 76831 Ilbesheim (DE)
(72) Erfinder: BÄHR, Oliver, 76831 Göcklingen (DE)
(74) Vertreter: Patentanwälte Dr. Keller, Schwertfeger Partnerschaft mbB

(56) Entgegenhaltungen:
- EP-A1- 0 453 852
- EP-A2- 0 358 014
- DE-T2- 69 008 119
- DE-U1- 9 202 780
- US-A- 2 598 959

## Beschreibung

Die vorliegende Erfindung betrifft eine Rollhacke, die zur Unterstockbodenbearbeitung im Weinbau oder im Spalierobstanbau geeignet ist.

Rollhacken sind üblicherweise seitlich an einem landwirtschaftlichen Fahrzeug montiert und werden dazu verwendet, den Boden entlang der Rebstöcke oder Obstbäume zu bearbeiten. Hierbei fahren die landwirtschaftlichen Fahrzeuge zwischen den Rebstockreihen oder Spalierobstbaumreihen hindurch. Durch die Verwendung der Rollhacke wird der Boden angehoben, gebrochen, verschoben und gelockert, so dass das Wachstum von unerwünschtem Unkraut im Unterstockbereich reduziert und der Einsatz von Spritzmitteln gegen das Unkraut reduziert oder vermieden werden kann.

Die Rollhacke verfügt über wenigstens eine Rollscheibe, wobei die Rollscheibe in der Regel als Zahn- oder Fingerscheibe ausgebildet ist, die mit den Zähnen bzw. Fingern in den Boden greift, so dass während des Rollens der Rollhacke über den Boden kleine Furchen in der Bodenfläche entstehen. Die Breite und Tiefe der Furche sowie die Menge der umgewälzten Erde ist von dem Anstellwinkel der Rollscheibe gegenüber der Bearbeitungsrichtung einstellbar. Die Dokumente DE 92 02780 U1 und EP 0 358 014 A2 beschreiben bekannte Rollhacken.

In einem ebenen Gelände mit gleichbleibenden Bodenverhältnissen kann üblicherweise ein einmal gewählter Anstellwinkel für die Bearbeitung des gesamten Geländes beibehalten werden. Es wurde jedoch festgestellt, dass sich bei schrägem Gelände oder bei Hanglagen, wie sie vor allem im Weinbau anzutreffen sind, die Furchenbreite und -tiefe in Abhängigkeit von der Fahrtrichtung im Gelände oder am Hang ändern.

Es ist daher wünschenswert, eine Rollhacke bereitzustellen, die es ermöglicht, auch in einem schrägen Gelände oder in einer Hanglage eine gleichmäßige Furchenbreite und Furchentiefe zu erzeugen.

Somit ist es Aufgabe der vorliegenden Erfindung, eine an einem Fahrzeug befestigbare Rollhacke bereitzustellen, welche einfach an das zu bearbeitende Gelände anpassbar ist, um eine gleichmäßige Furchenbreite und -tiefe auch bei Schräg- oder Hanglagen zu erhalten.

Die Aufgabe wird gelöst durch eine Rollhacke umfassend wenigstens eine Rollscheibe und eine Halterung mit einem Verbindungselement zur Befestigung an einem Fahrzeug und einem Anschlusselement, wobei die wenigstens eine Rollscheibe um ihre Achse drehbar in dem Anschlusselement aufgenommen ist, wobei das Anschlusselement und das Verbindungselement zur Einstellung eines Anstellwinkels der Rollscheibe gegeneinander verdrehbar sind, wobei das Verbindungselement oberhalb des Anschlusselements angeordnet ist und wobei zwischen Anschlusselement und Verbindungselement eine erste, ferngesteuerte Schwenkvorrichtung zur Einstellung des Anstellwinkels vorgesehen ist.

Der Erfindung liegt die Erkenntnis zugrunde, dass es notwendig ist, den Anstellwinkel der Rollscheiben der Geländesituation anzupassen, um eine gleichmäßige Furchenbreite und Furchentiefe zu erhalten. In Steillagen oder im Schräghang ist es somit notwendig, dass nach jeder Wende des landwirtschaftlichen Fahrzeugs der Anstellwinkel neu eingestellt werden muss, um eine optimale Bodenbearbeitung zu erreichen und um Unebenheiten im Boden zu reduzieren bzw. zu vermeiden. Insbesondere muss der Anstellwinkel vergleichsweise groß gewählt werden, wenn das landwirtschaftliche Fahrzeug einen Hang hochfährt, so dass die Erde oder das Bodenmaterial nach oben verschoben werden kann. Fährt das landwirtschaftliche Fahrzeug dagegen einen Hang hinunter, muss der Anstellwinkel deutlich reduziert werden, um zu verhindern, dass Erde oder Bodenmaterial den Hang hinunterfällt.

Unter Anstellwinkel wird im Rahmen der Erfindung der Winkel verstanden, den die wenigstens eine Rollscheibe in Bezug auf die Fahrtrichtung eines landwirtschaftlichen Fahrzeugs aufweist.

Mit Hilfe der erfindungsgemäßen Rollhacke lässt sich der Anstellwinkel und somit die Furchenbreite und -tiefe an das Gelände und die gewünschte Bearbeitung besonders einfach anpassen, da eine Verstellung der Rollscheibe beispielsweise über eine Steuervorrichtung vom einem Führerhaus eines landwirtschaftlichen Fahrzeugs möglich ist.

Gemäß einer bevorzugten Ausführungsform weist die erste Schwenkvorrichtung einen Zylinder auf, der an seinem einen Ende mit dem Verbindungselement und an seinem anderen Ende mit dem Anschlusselement jeweils drehbar befestigt ist. Die Schwenkbewegung der Schwenkvorrichtung zur Einstellung eines Anstellwinkels kann somit über den Hub des Zylinders, der fernsteuerbar ist, durchgeführt werden.

Gemäß einer bevorzugten Ausführungsform ist der Zylinder elektrisch oder hydraulisch betätigbar, da diese einfach mittels einer beispielsweise in einem Führerhaus eines landwirtschaftlichen Fahrzeugs angeordneten Steuervorrichtung fernsteuerbar sind. Darüber hinaus ermöglichen elektrische oder hydraulische Zylinder eine stufenlose Verstellung des Anstellwinkels.

Bei hydraulisch betätigbaren Zylindern besteht die Gefahr, dass bei äußerer Krafteinwirkung auf den Zylinder Hydraulikflüssigkeit von dem Zylinder in einen Speicherbehälter für Hydraulikflüssigkeit gedrückt werden kann. Daher ist es bei der Ausführungsform, bei der der Zylinder hydraulisch betätigbar ist, von besonderem Vorteil, dass ein Sperrblock vorgesehen ist, der den unerwünschten Fluss der Hydraulikflüssigkeit vom Zylinder in einen Speicherbehälter während eines Arbeitsprozesses verhindert, um den Anstellwinkel der Rollhacke beispielsweise auch bei härteren Böden beizubehalten.

Es hat sich als vorteilhaft erwiesen, dass ein Hubbegrenzer für den Zylinder vorgesehen ist, um gewünschte Voreinstellungen für den Anstellwinkel zu treffen.

Um eine kompakte Bauweise der Rollhacke zu erreichen, ist es von Vorteil, dass die erste Schwenkvorrichtung eine Schwenkplatte aufweist, wobei die Schwenkplatte drehbar gelagert und der Zylinder an seinem einen Ende mit dem Verbindungselement und an seinem anderen Ende mit der Schwenkplatte jeweils drehbar befestigt sind. Hierdurch lässt sich darüber hinaus auch ein großer Anstellwinkelbereich realisieren.

Vorzugsweise ist der Zylinder exzentrisch auf der Schwenkplatte angeordnet, um eine einfache und effektive Verstellung des Anstellwinkels der wenigstens einen Rollscheibe durchführen zu können.

Hierbei ist es von besonderem Vorteil, dass die Schwenkplatte hebelartig ausgebildet ist und der Zylinder an dem nach außen weisenden Ende der Schwenkplatte mit der Schwenkplatte verbunden ist. Hierdurch entsteht eine gelenkartige Verbindung, die die Einstellung des Anstellwinkels der wenigstens einen Rollscheibe mit einem vergleichsweise geringen Kraftaufwand ermöglicht.

Es ist weiter von Vorteil, dass die erste Schwenkvorrichtung eine Grundplatte aufweist, wobei die Grundplatte und die Schwenkplatte im Abstand voneinander angeordnet und über eine Welle starr miteinander verbunden sind und wobei das Verbindungselement eine Hülse aufweist, in der die Welle drehbar gelagert ist. Diese Maßnahme trägt dazu bei, dass die Schwenkvorrichtung kompakt ausgebildet ist und ermöglicht darüber hinaus den Einbau einer zusätzlichen Schwenkvorrichtung.

Es ist von Vorteil, dass eine zweite, mechanisch verstellbare Schwenkvorrichtung zur Einstellung des Anstellwinkels vorgesehen ist. Hierdurch ist es beispielsweise möglich, eine grobe Voreinstellung des Anstellwinkels an das Gelände mechanisch mittels der zweiten Schwenkvorrichtung vorzunehmen und eine Feinjustierung über die erste ferngesteuerte Schwenkvorrichtung vorzunehmen. Darüber hinaus bietet der Einsatz von zwei Schwenkvorrichtungen den Vorteil, dass der Anstellwinkel über einen sehr weiten Bereich variiert werden kann.

Bei einer bevorzugten Ausführungsform der zweiten mechanischen Schwenkvorrichtung ist vorgesehen, dass die erste ferngesteuerte Schwenkvorrichtung eine Grundplatte aufweist und die Verstellplatte zwischen Grundplatte und Anschlusselement angeordnet ist, wobei die Verstellplatte fest an dem Anschlusselement befestigt ist und die Verstellplatte und die Grundplatte gegeneinander verdrehbar sind. Da bei dieser Ausführungsform im Wesentlichen nur das Anschlusselement mit Rollscheibe gegenüber der ersten Schwenkvorrichtung verdreht wird, ermöglicht dies eine vergleichsweise kraftsparende und einfache Verstellung der Rollscheibe mittels der zweiten mechanischen Schwenkvorrichtung. Darüber hinaus ist die Anordnung mit zwei Schwenkvorrichtung sehr kompakt.

Es hat sich hierbei als vorteilhaft erwiesen, dass die Verstellplatte und die Grundplatte mittels eines Langlochs miteinander verbunden sind. Hierdurch ist es möglich, dass die zweite Schwenkvorrichtung stufenlos verstellbar ist.

Bei einer bevorzugten Ausführungsform ist die Grundplatte fest an dem Anschlusselement befestigt, so dass die Verstellung der ersten, ferngesteuerten Schwenkvorrichtung direkt auf die wenigstens eine Rollscheibe übertragen werden kann. Bei dieser Ausführungsform kann eine zweite, mechanische Schwenkvorrichtung weggelassen oder zwischen Verbindungselement und erster, ferngesteuerter Schwenkvorrichtung angeordnet werden.

Bevorzugte Ausführungsformen werden anhand der beigefügten Zeichnungen näher erläutert, in denen zeigen:
Fig. 1 eine Vorderansicht einer in einer Grundstellung befindlichen Rollhacke,
Fig. 2 die in Fig. 1 dargestellte Rollhacke in Grundstellung in einer Ansicht von schräg oben,
Fig. 3 eine Vorderansicht der in den Fig. 1 und 2 dargestellten Rollhacke, jedoch mit einer anderen Stellung als der Grundstellung.

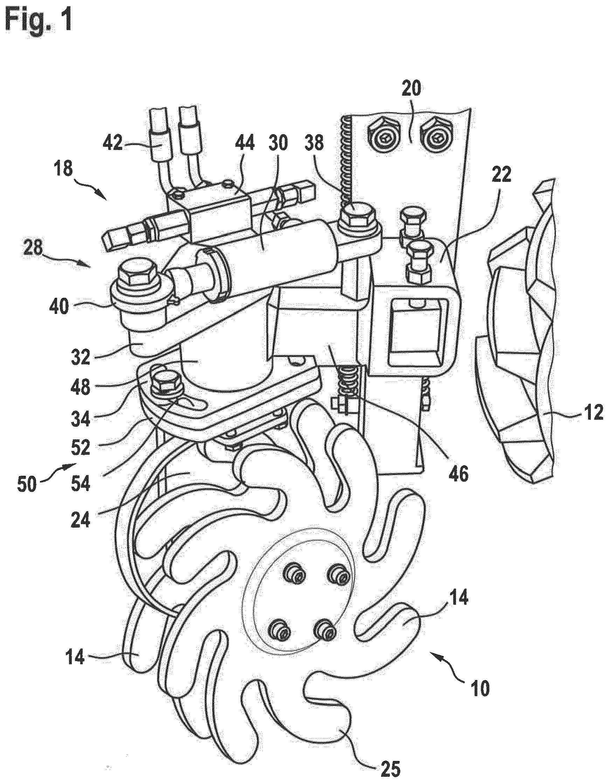

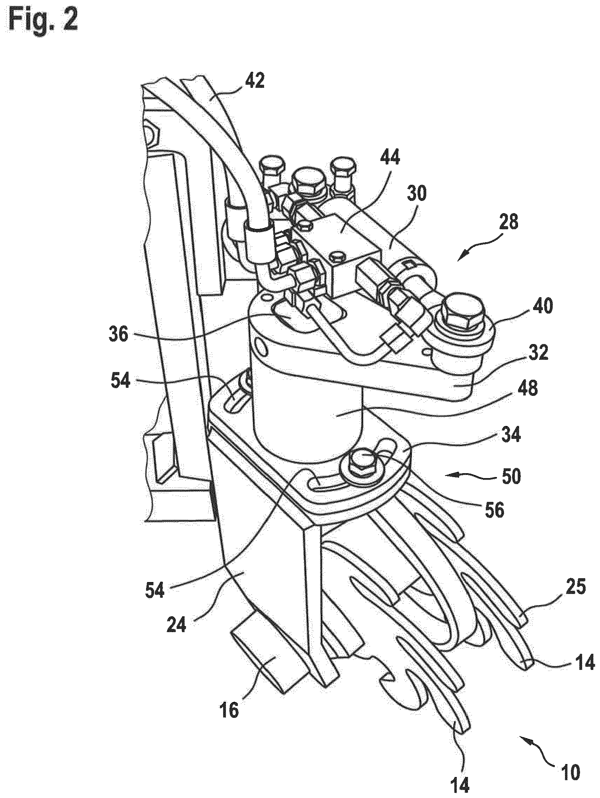

Fig. 1 zeigt eine an einem landwirtschaftlichen Fahrzeug befestigte Rollhacke 10. Von dem landwirtschaftlichen Fahrzeug ist lediglich ein Rad 12 dargestellt. Die Rollhacke 10 umfasst zwei parallel und im Abstand voneinander angeordnete Rollscheiben 14, die um eine gemeinsame Achse 16 (siehe Fig. 2) drehbar sind, sowie eine Halterung 18, die an einer Montagevorrichtung 20 befestigt ist. Die Montagevorrichtung 20 ist an dem landwirtschaftlichen Fahrzeug befestigt. Bei der Montagevorrichtung 20 handelt es sich um eine bekannte Hubvorrichtung, die üblicherweise an landwirtschaftlichen Fahrzeugen befestigt wird.

Die Halterung 18 umfasst ein Verbindungselement 22, das an der Montagevorrichtung 20 des Fahrzeugs befestigt ist, sowie ein Anschlusselement 24. Die beiden Rollscheiben 14 sind in dem Anschlusselement 24 drehbar gelagert und jeweils mit einer Vielzahl von gekrümmten Fingern 25 versehen, die um den Umfang jeder Rollscheibe 14 angeordnet sind.

Zwischen dem Verbindungselement 22 und dem Anschlusselement 24 ist eine erste ferngesteuerte Schwenkvorrichtung 28 vorgesehen.

Die Schwenkvorrichtung 28 umfasst einen Zylinder 30, eine Schwenkplatte 32 und eine im Abstand von der Schwenkplatte 32 angeordnete Grundplatte 34, die über eine in Fig. 2 dargestellte Welle 36 fest miteinander verbunden sind.

Der Zylinder 30 ist an seinem einen Ende 38 mit dem Verbindungselement 22 und an seinem anderen Ende 40 mit der Schwenkplatte 32 verbunden. Die beiden Enden 38 und 40 sind jeweils drehbar auf dem Verbindungselement 22 bzw. der Schwenkplatte 32 gelagert.

Die Schwenkplatte 32 ist keilförmig ausgebildet, wobei das Ende 40 des Zylinders 30 im Bereich der keilförmigen Spitze an der Oberseite der Schwenkplatte 32 angeordnet ist, während die Welle 36 durch die breite Basis der Schwenkplatte 32 hindurchgeht. Hierdurch bildet die Schwenkplatte 32 einen Hebel, an dessen keilförmiger Spitze der Zylinder 30 angreift.

Sowohl der Zylinder 30 als auch die Schwenkplatte 32 und die Grundplatte 34 sind horizontal ausgerichtet.

Der Zylinder 30 wird über eine Hydraulikvorrichtung 42 betätigt.

Die Halterung 16 weist einen Seitenarm 46 auf, an dessen Ende eine Hülse 48 vorgesehen ist, die drehbar um die Welle 36 greift.

Der Anstellwinkel der Rollhacke 14 kann somit über die ferngesteuerte Schwenkvorrichtung 28 verstellt werden. Hierzu wird beispielswiese vom Fahrerhaus mittels einer nicht dargestellten Eingabe- und Steuervorrichtung die Hydraulikzufuhr in den Zylinder 30 verändert, so dass sich der Hub des Zylinders 30 verändert. Dieser Hub führt dazu, dass sich die Schwenkplatte 32 gegenüber dem Verbindungselement 22 dreht, indem sich die Welle 36 der Schwenkvorrichtung 28 in der Hülse 48 der Verbindungsvorrichtung 22 dreht. Da die Schwenkvorrichtung 28 wiederum mit dem Anschlusselement 24 verbunden ist, drehen sich die Rollscheiben 14 um einen gewünschten Winkel.

Bei harten Böden oder schwierigem Gelände besteht die Gefahr, dass ein starker Druck auf die Rollscheiben 14 ausgeübt wird, der wiederum dazu führen kann, dass sich die Rollscheiben 14 in eine ungewünschte Richtung drehen. Bei Hydraulikanlagen kann dies dazu führen, dass Hydraulikflüssigkeit durch den Zylinder wieder in den Hydraulikspeicher zurückgedrückt wird. Um dies zu verhindern, ist ein Sperrelement 44 vorgesehen, welches verhindert, dass Hydraulikflüssigkeit aufgrund von äußeren Einflüssen, wie harten Böden, zurück in den Hydraulikspeicher gedrückt wird.

Die Rollhacke 10 weist eine zweite mechanische Stellvorrichtung 50 auf, die im Wesentlichen durch eine am Anschlusselement 24 befestigte Verstellplatte 52 gebildet wird. Die Grundplatte 32 der ersten Schwenkvorrichtung 28 liegt auf der Verstellplatte 52 auf und ist mit dieser so verbunden, dass eine gegenseitige Verdrehbarkeit noch möglich ist. Die gemeinsame Drehachse der Grundplatte 32 und der Verstellplatte 52 entspricht der Drehachse der Welle 36.

Zur Einstellung eines Anstellwinkels der Rollscheiben 14 gegenüber der Fahrtrichtung sind in der Grundplatte 34 zwei entgegengesetzt liegende Langlöcher 54 vorgesehen, in denen jeweils ein an der Verstellplatte 52 befestigter Stift 56 geführt ist. Der Stift 56 ist mittels bekannter Maßnahmen in der gewünschten Position im Langloch 54 arretierbar.

Bei der in den Fig. 1 bis 3 dargestellten Ausführungsform kann der Anstellwinkel der Rollscheiben 14 somit einerseits durch die erste, ferngesteuerte hydraulische Schwenkvorrichtung als auch durch die zweite, mechanische Schwenkvorrichtung 50 eingestellt werden. Hierbei haben beide Schwenkvorrichtungen eine gemeinsame Drehachse.

Mit Hilfe der beiden Schwenkvorrichtungen lassen sich sehr große Bereiche für den Anstellwinkel einstellen. So können die Anstellwinkel je nach Auslegung des Zylinderhubs, der Art der Schenkplatte und der Form der Langlöcher in einem Bereich von bis zu 180° variiert werden.

Fig. 1 und 2 zeigen die Rollhacke in einer Stellung, in der sich sowohl die erste Schwenkvorrichtung (28) als auch die zweite Schwenkvorrichtung (50) jeweils in ihrer Grundstellung befindet.

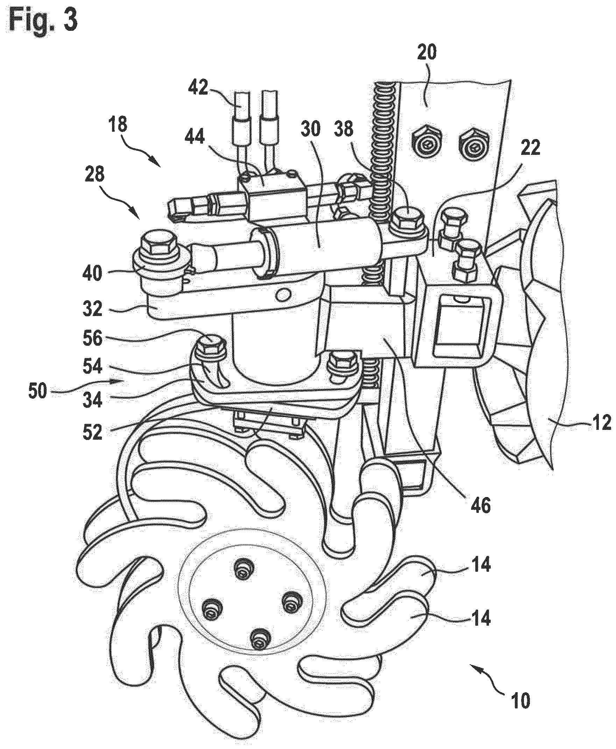

Fig. 3 zeigt eine Ausführungsform, bei der sowohl die erste Schwenkvorrichtung 28 als auch die zweite Schwenkvorrichtung 50 gegenüber der Grundstellung verstellt sind.

Im Betrieb kann die zweite mechanische Schwenkvorrichtung beispielsweise verwendet werden, um die Rollhacke zunächst unter einem ersten groben Anstellwinkel auszurichten. Eine Feinjustierung bzw. eine individuelle Anpassung des Anstellwinkels an das Gelände kann dann über die erste, ferngesteuerte Schwenkvorrichtung erfolgen.

Bei der in den Fig. 1 bis 3 dargestellten Ausführungsform erfolgt die Betätigung des Zylinders 30 auf hydraulische Art und Weise. Im Rahmen der Erfindung ist jedoch auch eine elektrische Betätigung des Zylinders möglich. Wie bei der in den Fig. 1 bis 3 dargestellten Ausführungsform erfolgt die elektrische Betätigung des Zylinders über eine Steuervorrichtung im Führerhaus.

Die Figuren 1 bis 3 zeigen Ausführungsformen, bei denen das Verbindungselement 22 oberhalb des Anschlusselements 24 angeordnet ist, wobei die gemeinsame Drehachse der Grundplatte 32 und der Verstellplatte 52 sowie die Drehachse der Welle 36 vertikal ausgerichtet sind.

Aufgrund der Tatsache, dass das Verbindungselement 22 oberhalb des Anschlusselements 24 angeordnet ist und somit eine Verdrehung des Verbindungselements 22 und des Anschlusselements 24 um eine vertikale Achse möglich ist, wird eine sehr kompakte Rollhacke ausgebildet. Diese kompakte Rollhacke lässt sich beispielsweise einfach an einer Fahrzeugseite montieren, was wiederum den Vorteil hat, dass das landwirtschaftliche Fahrzeug auch während des Einsatzes kompakt und wendig bleibt.

Bei einer nicht dargestellten Ausführungsform kann die zweite mechanische Schwenkvorrichtung weggelassen werden. In diesem Fall sind die Verstellplatte 52 und die Grundplatte 34 fest miteinander verbunden oder einstückig ausgebildet. Alternativ kann die Grundplatte 34 direkt am Anschlusselement 24 befestigt sein.

Wenn auch nicht dargestellt, so können an dem Zylinder 32 Hubbegrenzer vorgesehen sein, um Nutzern, die in der Regel das gleiche Gelände bearbeiten, eine Voreinstellung für das zu bearbeitende Gelände zu geben.

Die Rollhacke 10 kann mittels der bekannten Montagevorrichtung 20 an jeder Position eines Landfahrzeugs montiert werden, sei es vorne, hinten oder in der Mitte.

## Patentansprüche

1. Rollhacke umfassend wenigstens eine Rollscheibe (14) und eine Halterung (18) mit einem Verbindungselement (22) zur Befestigung an einem Fahrzeug und einem Anschlusselement (24), wobei die wenigstens eine Rollscheibe (14) um ihre Achse drehbar in dem Anschlusselement (24) aufgenommen ist, wobei das Anschlusselement (24) und das Verbindungselement (22) zur Einstellung eines Anstellwinkels der Rollscheibe (14) gegeneinander verdrehbar sind, **dadurch gekennzeichnet, dass** das Verbindungselement (22) oberhalb des Anschlusselements (24) angeordnet ist und dass zwischen Anschlusselement (24) und Verbindungselement (22) eine erste, ferngesteuerte Schwenkvorrichtung (28) zur Einstellung des Anstellwinkels vorgesehen ist.

2. Rollhacke nach Anspruch 1, **dadurch gekennzeichnet, dass** die erste Schwenkvorrichtung (28) einen Zylinder (30) aufweist, der an seinem einen Ende (38) mit dem Verbindungselement (22) und an seinem anderen Ende (40) mit dem Anschlusselement (24) jeweils drehbar befestigt ist.

3. Rollhacke nach Anspruch 2, **dadurch gekennzeichnet, dass** der Zylinder (30) elektrisch oder hydraulisch betätigbar ist.

4. Rollhacke nach Anspruch 3, **dadurch gekennzeichnet, dass** der Zylinder (30) hydraulisch betätigbar ist und ein Sperrblock (44) vorgesehen ist.

5. Rollhacke nach einem der Ansprüche 2 bis 4, **dadurch gekennzeichnet, dass** ein Hubbegrenzer für den Zylinder (30) vorgesehen ist.

6. Rollhacke nach einem der Ansprüche 2 bis 5, **dadurch gekennzeichnet, dass** die erste Schwenkvorrichtung (28) eine Schwenkplatte (32) aufweist, wobei die Schwenkplatte (32) drehbar gelagert ist und der Zylinder (30) an seinem einen Ende (38) mit dem Verbindungselement (22) und an seinem anderen Ende (40) mit der Schwenkplatte (32) jeweils drehbar befestigt sind.

7. Rollhacke nach Anspruch 6, **dadurch gekennzeichnet, dass** der Zylinder (30) exzentrisch auf der Schwenkplatte (32) angeordnet ist.

8. Rollhacke nach Anspruch 6 oder 7, **dadurch gekennzeichnet, dass** die Schwenkplatte (32) hebelartig ausgebildet ist und der Zylinder (30) an dem nach außen weisenden Ende der Schwenkplatte (32) mit der Schwenkplatte (32) verbunden ist.

9. Rollhacke nach einem der Ansprüche 6 bis 8, **dadurch gekennzeichnet, dass** die erste Schwenkvorrichtung (26) eine Grundplatte (34) aufweist, wobei die Grundplatte (34) und die Schwenkplatte (32) mit Abstand voneinander angeordnet und über eine Welle (36) starr miteinander verbunden sind und wobei das Verbindungselement (22) eine Hülse (48) aufweist, in der die Welle (36) drehbar gelagert ist.

10. Rollhacke nach einem der vorhergehenden Ansprüche, **dadurch gekennzeichnet, dass** eine zweite, mechanisch verstellbare Schwenkvorrichtung (50) zur Einstellung des Anstellwinkels vorgesehen ist.

11. Rollhacke nach Anspruch 10, **dadurch gekennzeichnet, dass** die zweite, mechanische Schwenkvorrichtung (50) eine Verstellplatte (52) aufweist, die zwischen der ersten, ferngesteuerten Schenkvorrichtung (28) und dem Anschlusselement (24) oder zwischen der ersten, ferngesteuerten Schenkvorrichtung (28) und dem Verbindungselement (22) angeordnet ist.

12. Rollhacke nach Anspruch 11, **dadurch gekennzeichnet, dass** die erste ferngesteuerte Schwenkvorrichtung (28) eine Grundplatte (34) aufweist und die Verstellplatte (52) zwischen Grundplatte (34) und Anschlusselement (24) angeordnet ist, wobei die Verstellplatte (52) fest an dem Anschlusselement (24) befestigt ist und die Verstellplatte (52) und die Grundplatte (34) gegeneinander verdrehbar sind.

13. Rollhacke nach Anspruch 12, **dadurch gekennzeichnet, dass** die Verstellplatte (52) und die Grundplatte (34) mittels eines Langlochs (54) miteinander verbunden sind.

14. Rollhacke nach Anspruch 9, **dadurch gekennzeichnet, dass** die Grundplatte fest an dem Anschlusselement befestigt ist.

15. Rollhacke nach einem der vorhergehenden Ansprüche, **dadurch gekennzeichnet, dass** die erste Schwenkvorrichtung (28) und/oder die zweite Schwenkvorrichtung (50) ausgelegt sind, den Anstellwinkel stufenlos zu verstellen.

## Claims

1. Rolling cultivator, comprising at least one rolling disc (14) and a mount (18) having a connecting element (22) for fastening to a vehicle and an attaching element (24), the at least one rolling disc (14) being accommodated so as to be rotatable about its axis in the attaching element (24), the attaching element (24) and the connecting element (22) being rotatable relative to one another for setting a working angle of the rolling disc (14), **characterised in that** the connecting element (22) is arranged above the attaching element (24), and **in that** a first, remote-controlled swivel apparatus (28) is provided between the attaching element (24) and the connecting element (22) for setting the working angle.

2. Rolling cultivator according to claim 1, **characterised in that** the first swivel apparatus (28) has a cylinder (30) which is rotatably fastened to the connecting element (22) at one end (38) and to the attaching element (24) at the other end (40).

3. Rolling cultivator according to claim 2, **characterised in that** the cylinder (30) can be electrically or hydraulically actuated.

4. Rolling cultivator according to claim 3, **characterised in that** the cylinder (30) can be hydraulically actuated and a locking block (44) is provided.

5. Rolling cultivator according to any of claims 2 to 4, **characterised in that** a stroke arresting device for the cylinder (30) is provided.

6. Rolling cultivator according to any of claims 2 to 5, **characterised in that** the first swivel apparatus (28) has a swivel plate (32), the swivel plate (32) being rotatably mounted and the cylinder (30) being rotatably fastened to the connecting element (22) at one end (38) and to the swivel plate (32) at the other end (40).

7. Rolling cultivator according to claim 6, **characterised in that** the cylinder (30) is arranged eccentrically on the swivel plate (32).

8. Rolling cultivator according to either claim 6 or claim 7, **characterised in that** the swivel plate (32) is lever-like and the cylinder (30) is connected to the swivel plate (32) on the outwardly facing end of the swivel plate (32).

9. Rolling cultivator according to any of claims 6 to 8, **characterised in that** the first swivel apparatus (26) has a base plate (34), the base plate (34) and the swivel plate (32) being mutually spaced and being rigidly interconnected via a shaft (36), and the connecting element (22) having a sleeve (48) in which the shaft (36) is rotatably mounted.

10. Rolling cultivator according to any of the preceding claims, **characterised in that** a second, mechanically adjustable swivel apparatus (50) is provided for setting the working angle.

11. Rolling cultivator according to claim 10, **characterised in that** the second, mechanical swivel apparatus (50) has an adjustment plate (52) which is arranged between the first, remote-controlled swivel apparatus (28) and the attaching element (24) or between the first, remote-controlled swivel apparatus (28) and the connecting element (22).

12. Rolling cultivator according to claim 11, **characterised in that** the first remote-controlled swivel apparatus (28) has a base plate (34) and the adjustment plate (52) is arranged between the base plate (34) and the attaching element (24), the adjustment plate (52) being rigidly fastened to the attaching element (24) and the adjustment plate (52) and the base plate (34) being rotatable relative to one another.

13. Rolling cultivator according to claim 12, **characterised in that** the adjustment plate (52) and the base plate (34) are interconnected by means of an elongate hole (54).

14. Rolling cultivator according to claim 9, **characterised in that** the base plate is rigidly fastened to the attaching element.

15. Rolling cultivator according to any of the preceding claims, **characterised in that** the first swivel apparatus (28) and/or the second swivel apparatus (50) are designed to continuously adjust the working angle.

## Revendications

1. Houe à rouleaux, comprenant au moins un disque émotteur (14) et un support (18) muni d'un élément de liaison (22) conçu pour la fixation à un véhicule, et d'un élément de rattachement (24), le disque émotteur (14) à présence minimale étant logé dans l'élément de rattachement (24), avec faculté de rotation autour de son axe, ledit élément de rattachement (24) et ledit élément de liaison (22) étant aptes à tourner l'un par rapport à l'autre, en vue de régler un angle d'attaque dudit disque émotteur (14), **caractérisée par le fait que** l'élément de liaison (22) est disposé au-dessus de l'élément de rattachement (24) ; et **par le fait qu'**un premier dispositif de pivotement (28), télécommandé, est prévu entre ledit élément de rattachement (24) et ledit élément de liaison (22) en vue du réglage de l'angle d'attaque.

2. Houe à rouleaux selon la revendication 1, **caractérisée par le fait que** le premier dispositif de pivotement (28) est doté d'un vérin (30) respectivement fixé, avec faculté de rotation, à l'élément de liaison (22) par l'une (38) de ses extrémités, et à l'élément de rattachement (24) par son autre extrémité (40).

3. Houe à rouleaux selon la revendication 2, **caractérisée par le fait que** le vérin (30) peut être actionné électriquement ou hydrauliquement.

4. Houe à rouleaux selon la revendication 3, **caractérisée par le fait que** le vérin (30) est actionnable hydrauliquement, un bloc de verrouillage (44) étant prévu.

5. Houe à rouleaux selon l'une des revendications 2 à 4, **caractérisée par le fait qu'**un limiteur de courses est prévu pour le vérin (30).

6. Houe à rouleaux selon l'une des revendications 2 à 5, **caractérisée par le fait que** le premier dispositif de pivotement (28) est doté d'une platine pivotante (32), sachant que ladite platine pivotante (32) est montée à rotation et que le vérin (30) est respectivement fixé, avec faculté de rotation, à l'élément de liaison (22) par l'une (38) de ses extrémités, et à ladite platine pivotante (32) par son autre extrémité (40).

7. Houe à rouleaux selon la revendication 6, **caractérisée par le fait que** le vérin (30) est disposé excentriquement sur la platine pivotante (32).

8. Houe à rouleaux selon la revendication 6 ou 7, **caractérisée par le fait que** la platine pivotante (32) présente une réalisation du type levier, et le vérin (30) est relié à ladite platine pivotante (32) à l'extrémité de ladite platine pivotante (32) qui pointe vers l'extérieur.

9. Houe à rouleaux selon l'une des revendications 6 à 8, **caractérisée par le fait que** le premier dispositif de pivotement (28) comporte une platine d'embase (34), ladite platine d'embase (34) et la platine pivotante (32) étant placées à distance l'une de l'autre et étant reliées rigidement l'une à l'autre par l'intermédiaire d'un arbre (36), l'élément de liaison (22) étant pourvu d'une douille (48) dans laquelle ledit arbre (36) est monté à rotation.

10. Houe à rouleaux selon l'une des revendications précédentes, **caractérisée par le fait qu'**un second dispositif de pivotement (50), ajustable mécaniquement, est prévu pour le réglage de l'angle d'attaque.

11. Houe à rouleaux selon la revendication 10, **caractérisée par le fait que** le second dispositif mécanique de pivotement (50) est muni d'une platine d'ajustement (52) interposée entre le premier dispositif de pivotement (28) télécommandé et l'élément de rattachement (24), ou entre ledit premier dispositif de pivotement (28) télécommandé et l'élément de liaison (22).

12. Houe à rouleaux selon la revendication 11, **caractérisée par le fait que** le premier dispositif de pivotement (28), télécommandé, comporte une platine d'embase (34) et la platine d'ajustement (52) est interposée entre ladite platine d'embase (34) et l'élément de rattachement (24), sachant que la platine d'ajustement (52) est fixée rigidement audit élément de rattachement (24), et que ladite platine d'ajustement (52) et ladite platine d'embase (34) peuvent tourner l'une par rapport à l'autre.

13. Houe à rouleaux selon la revendication 12, **caractérisée par le fait que** la platine d'ajustement (52) et la platine d'embase (34) sont reliées l'une à l'autre au moyen d'un trou oblong (54).

14. Houe à rouleaux selon la revendication 9, **caractérisée par le fait que** la platine d'embase est fixée rigidement à l'élément de rattachement.

15. Houe à rouleaux selon l'une des revendications précédentes, **caractérisée par le fait que** le premier dispositif de pivotement (28), et/ou le second dispositif de pivotement (50), est (sont) conçu(s) pour l'ajustement en continu de l'angle d'attaque.
